# EUROPEAN PATENT APPLICATION

(11) **EP 2 362 086 A1**
(43) Date of publication of application: **31.08.2011**
(21) Application number: 09833137.4
(22) Date of filing: 01.12.2009
(51) Int. Cl.: F02D 41/04, F02B 37/007, F02B 39/16, F02D 23/02, F02D 41/02

(54) **METHOD AND DEVICE FOR CONTROLLING DIESEL ENGINE, AND SHIP WITH SAME**

(30) Priority: 16.12.2008 JP 2008319169
(71) Applicant: Kawasaki Jukogyo Kabushiki Kaisha, Kobe-shi, Hyogo 650-8670 (JP)
(72) Inventor: NOGAMI, Tetsuo, Hyogo 650-8670 (JP); HIGASHIDA, Masanori, Hyogo 650-8670 (JP)
(74) Representative: Witte, Weller & Partner
(86) International application number: PCT/JP2009/006509
(87) International publication number: WO 2010/070827

(57) **Abstract**

The present invention is a control device of a diesel engine including turbochargers. A fuel limitation arithmetic unit (3) configured to determine a fuel quantity based on operation statuses of the turbochargers is connected to a fuel limitation portion (27) configured to transmit an operation signal to a governor rack. The fuel limitation arithmetic unit (3) determines a fuel limitation value in accordance with the revolutions of operating turbochargers and/or the number of operating turbochargers, and the fuel limitation portion (27) determines a fuel injection quantity in accordance with the fuel limitation value.

## Description

### Technical Field

The present invention relates to a method for controlling a diesel engine including a turbocharger, a control device configured to control the diesel engine, and a ship including the control device.

### Background Art

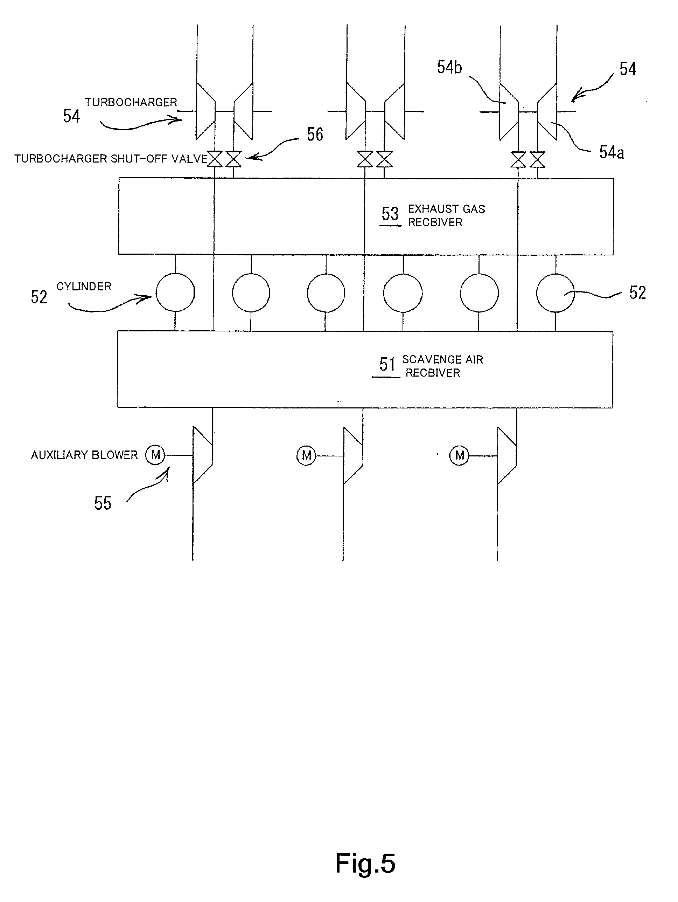

To increase an engine output by increasing scavenging-air pressure or intake pressure, some diesel engines include turbochargers. Fig. 5 shows a scavenge air system and exhaust gas system of such diesel engine. In the diesel engine, fuel is injected into a scavenging gas supplied through a scavenge air receiver 51 to a cylinder 52 and is ignited to be expanded. Thus, energy is output as rotational power. An exhaust gas generated by combustion gathers in an exhaust gas receiver 53 through exhaust valves (not shown). Before the exhaust gas is discharged from the exhaust gas receiver 53 to the outside of the engine, it flows through a turbocharger 54. In the turbocharger 54, an exhaust turbine 54a is rotated by the exhaust gas, and this further rotates a compressor 54b coupled to the exhaust turbine 54a. The compressor 54b can compress air and supply this compressed gas to the scavenge air receiver 51. When an engine load is low, the energy of the exhaust gas is low. Therefore, the amount of compressed gas supplied from the turbocharger 54 is small. On this account, an auxiliary blower 55 supplies the shortfall. If the load increases to some extent, the turbocharger 54 can adequately supply the compressed gas. Therefore, the auxiliary blower 55 stops.

It is known that in the diesel engine, such as a marine diesel engine, including a plurality of turbochargers, the amount of fuel consumption when carrying out a low load operation of the engine can be reduced by reducing the number of operating turbochargers, that is, by so-called turbocharger cut. The turbocharger cut is carried out by closing a turbocharger shut-off valve 56 located between the exhaust gas receiver and the exhaust turbine of the turbocharger and a turbocharger shut-off valve 56 located between the compressor of the turbocharger and the scavenge air receiver. During the low load operation of the engine, the revolution of the turbocharger is low, and the turbocharger is operated with low efficiency. Therefore, energy recovery is not good. However, by carrying out the turbocharger cut, the exhaust gas intensively flows to the operating turbochargers. Therefore, even during the low load operation of the engine, the efficiency of the turbocharger can be increased, and an energy recovery rate increases. In addition, when the turbocharger cut is carried out, the amount of exhaust gas flowing out from the exhaust gas receiver is reduced. Therefore, the pressure in the exhaust gas receiver increases, and the pressure in the scavenge air receiver also increases via the cylinder. On this account, a maximum compression pressure in the cylinder increases, and combustion efficiency of the engine increases. To be specific, overall, during the low load operation, the amount of fuel consumption in the case of carrying out the turbocharger cut is smaller than that in the case of operating all the turbochargers.

PTL 1 describes an example as an operation mode similar to the turbocharger cut, that is, an example in which the capacity of a compressor side and the capacity of a turbine side in the turbocharger are reduced. An object of this example is to improve a fuel efficiency by improving the efficiency of the turbocharger during, for example, the low load operation.

### Citation List

### Patent Literature

PTL 1: Japanese Laid-Open Patent Application Publication No. 2003-328763

### Summary of Invention

### Technical Problem

By carrying out the turbocharger cut as above, the fuel efficiency improves during the low load operation of the engine. However, when the load of the engine increases, the speed of the operating turbocharger may become excessive speed. To be specific, by the turbocharger cut, the exhaust gas does not flow to the turbochargers which are not operating. Therefore, the exhaust gas is intensively supplied to the operating turbochargers, and this may cause the excessive speed. On this account, when carrying out the turbocharger cut, the revolution of the engine is commonly limited to prevent the load of the engine from becoming high.

However, even if the revolution of the engine is limited, the excessive speed of the turbocharger may not be prevented. For example, in the case of the marine diesel engine, when the ocean surface is unruffled, the engine load is proportional to the cube of the revolution of the engine. Therefore, if the revolution of the engine is limited, the engine load and the revolution of the turbocharger are also limited. However, in a case where the load of a propeller increases by steerage, a tidal current direction, or the like, the engine load may increase even if the revolution of the engine stays the same. In such a case, the turbocharger cannot be surely protected by limiting the revolution of the engine.

An object of the present invention is to effectively prevent the turbocharger from operating at the excessive speed.

### Solution to Problem

The present invention is a method for controlling a diesel engine including turbochargers, the method including the step of limiting a fuel injection quantity based on operation statuses of the turbochargers.

Unlike the above-described conventional example which limits the revolution of the engine, the present invention limits the fuel injection quantity based on the operation statuses of the turbochargers. The fuel injection quantity is a factor directly linked to the output of the engine and is closely related to the revolution of the turbocharger. Since the fuel injection quantity is limited in accordance with the operation statuses of the turbochargers, it is possible to effectively prevent the turbochargers from operating at an excessive speed.

It is preferable to detect the revolutions of operating turbochargers; determine a fuel limitation value in accordance with the detected revolutions of the turbochargers; and determine the fuel injection quantity in accordance with the fuel limitation value. When controlling the fuel injection quantity by, for example, the governor device, generally, a difference between the set value of the revolution of the engine and the actual value of the revolution of the engine is input, and a signal from a torque limiter and a signal from a scavenging-air pressure limiter are transmitted. In the present invention, in addition to such signals, the fuel limitation value determined in accordance with the revolutions of operating turbochargers is utilized as a signal for controlling the fuel injection quantity. Therefore, it is possible to effectively and surely prevent the turbochargers from becoming the excessive speed.

It is further preferable to correct the fuel limitation value such that each of the detected revolutions of the turbochargers becomes an acceptable revolution of the turbocharger or lower. The fuel limitation value determined in accordance with the revolution of the turbocharger may be an appropriate value, but it may not be adequate depending on, for example, the operation status of the engine. To be specific, the detected revolution of the turbocharger may exceed the acceptable revolution of the turbocharger, and it is desired to correct the fuel limitation value to a more preferable value depending on circumstances. In the present invention, when the detected revolution of the turbocharger exceeds the acceptable revolution of the turbocharger, the fuel limitation value is corrected so as to be further strictly limited. Therefore, the subsequent control operations can be carried out further appropriately.

When the diesel engine includes a plurality of the turbochargers, the fuel limitation value may be determined in accordance with the number of operating turbochargers, and the fuel injection quantity may be determined in accordance with the fuel limitation value. As described above, conventionally, if the turbocharger cut is carried out when the engine includes a plurality of turbochargers, the revolution of the turbocharger may become too high by the increase in load, and this is not avoidable only by limiting the revolution of the engine. However, as in the present invention, by setting the fuel limitation value such that the fuel quantity is reduced in accordance with the reduction in the number of operating turbochargers due to the turbocharger cut, the excessive speed of the turbocharger can be generally prevented as long as the operation of the engine does not exceed rating.

It is preferable to detect the revolutions of the turbochargers; identify the number of operating turbochargers based on the detected revolutions of the turbochargers; and determine the fuel limitation value in accordance with the identified number of operating turbochargers. The fuel limitation value based on the number of operating turbochargers may be set manually by, for example, an operator who specifies the number of operating turbochargers. However, in such a case, troubles may occur by forgetting to set the number of operating turbochargers. However, in the present invention, the fuel limitation value is set automatically. Since it is unnecessary for the operator to manually set the fuel limitation value when, for example, specifying the number of operating turbochargers, the troubles do not occur.

The present invention is a control device of a diesel engine including turbochargers, the control device including: a fuel limitation arithmetic unit configured to determine a fuel quantity based on operation statuses of the turbochargers, wherein the fuel limitation arithmetic unit is connected to a fuel limitation portion configured to transmit an operation signal to a governor rack.

In accordance with the control device of the present invention, the fuel limitation arithmetic unit and the fuel limitation portion and governor rack connected to the fuel limitation arithmetic unit limit the fuel injection quantity based on the operation statuses of the turbochargers. Therefore, the control device of the present invention can smoothly carry out the method for controlling the diesel engine according to the present invention.

It is preferable that the fuel limitation arithmetic unit determine a fuel limitation value in accordance with the revolutions of operating turbochargers. In this case, the fuel limitation arithmetic unit determines the fuel limitation value corresponding to the revolutions of the operating turbochargers, and a signal regarding the fuel limitation value is used to control the fuel injection quantity. Therefore, the above control method is realized, and it is possible to especially effectively prevent the turbochargers from becoming the excessive speed.

It is preferable that the control device further include an automatic correcting unit configured to correct the fuel limitation value such that each of the revolutions of the operating turbochargers becomes an acceptable revolution of the turbocharger or lower, wherein the automatic correcting unit is attached to the fuel limitation arithmetic unit. With this, if the revolution of the turbocharger exceeds the acceptable revolution of the turbocharger, the automatic correcting unit can appropriately correct the fuel limitation value in accordance with the excessive speed or period. Therefore, the subsequent control operations can be carried out further appropriately.

It is also preferable that when the diesel engine includes a plurality of the turbochargers, the fuel limitation arithmetic unit determine the fuel limitation value in accordance with the number of operating turbochargers among the plurality of turbochargers. With this, when carrying out the turbocharger cut, the fuel limitation arithmetic unit automatically determine the fuel limitation value such that the fuel is reduced in accordance with the reduction in the number of operating turbochargers. Thus, the turbocharger is prevented from becoming the excessive speed.

It is preferable that the fuel limitation arithmetic unit include a number identifying unit configured to detect the revolutions of the turbochargers and identify the number of operating turbochargers based on the detected revolutions of the turbochargers. With this, the number of operating turbochargers is automatically input, and it is unnecessary for the operator to manually input the number of operating turbochargers.

The above object, other objects, features and advantages of the present invention will be made clear by the following detailed explanation of preferred embodiments with reference to the attached drawings.

### Advantageous Effects of Invention

The present invention can effectively prevent the turbocharger from becoming the excessive speed and can protect the turbocharger.

### Brief Description of Drawings

[Fig. 1] Fig. 1 is a schematic diagram showing the configuration of a governor device according to an embodiment of the present invention.
[Fig. 2] Fig. 2 is a block diagram showing the governor device for a marine diesel engine according to Embodiment 1 of the present invention.
[Fig. 3] Fig. 3 is a block diagram showing the governor device for the marine diesel engine according to Embodiment 2 of the present invention.
[Fig. 4] Fig. 4 is a block diagram showing the governor device for the marine diesel engine according to Embodiment 3 of the present invention.
[Fig. 5] Fig. 5 is a conceptual diagram showing a common scavenge air system and exhaust gas system of a diesel engine including turbochargers.

### Reference Signs List

- 1: revolution sensor
- 2: maximum value selector
- 3: fuel limitation arithmetic unit
- 5: integration arithmetic unit
- 11: number-of-operating-turbochargers changer
- 12: fuel limitation selector
- 20: control portion
- 27: fuel limitation portion
- 54: turbocharger

### Description of Embodiments

Hereinafter, embodiments of the present invention will be explained in reference to the attached drawings.

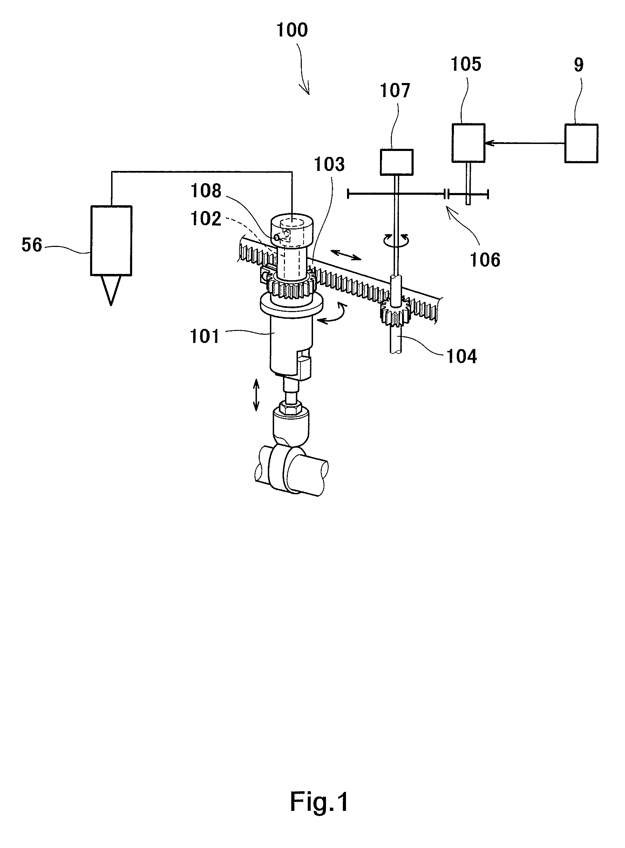

As shown in Fig. 1, a governor device 100 according to an embodiment of the present invention adjusts a fuel injection quantity of a fuel injection valve 56. A fuel pump 101 is connected to the fuel injection valve 56. The fuel pump 101 is configured to transfer a fuel to the fuel injection valve 56 by forward and backward movements of a plunger 102. The plunger 102 is coupled to a fuel control rack 103. The fuel pump 101 includes a feed hole 108. When the feed hole 108 communicates with a cut-out lead formed on the plunger 102, the fuel can be released from the fuel pump 101. When the fuel control rack 103 is displaced, a longitudinal movement distance of the plunger 102 (to be specific, an effective stroke of the plunger 102) changes, the longitudinal movement distance being necessary for the plunger 102 to move from a bottom dead center to a position where the cut-out lead communicates with the feed hole 108. With this, the amount of fuel supplied from the fuel pump 101 is changed, and the fuel injection quantity of the fuel injection valve 56 can be changed. As above, the governor device 100 of the present embodiment is configured to be able to adjust the fuel injection quantity by the displacement of the fuel control rack 103.

The fuel control rack 103 is coupled to a rack adjusting rod 104 and is configured to be displaced by the rotation of the rack adjusting rod 104. A rotational driving force of an actuator 105, such as a motor, is reduced by a predetermined reducer 106 and then input to the rack adjusting rod 104. Thus, the rack adjusting rod 104 rotates. A stopper 107 is provided at the rack adjusting rod 104. A rotation range of the rack adjusting rod 104 is mechanically limited by the stopper 107. With this, the limit of the movement of the fuel control rack 103 is mechanically limited. Moreover, the actuator 105 is operated by a below-described limiting element 9. The rotation range of the rack adjusting rod 104 is also limited by this limiting element. With this, the limit of the movement of the fuel control rack 103 can be electronically limited.

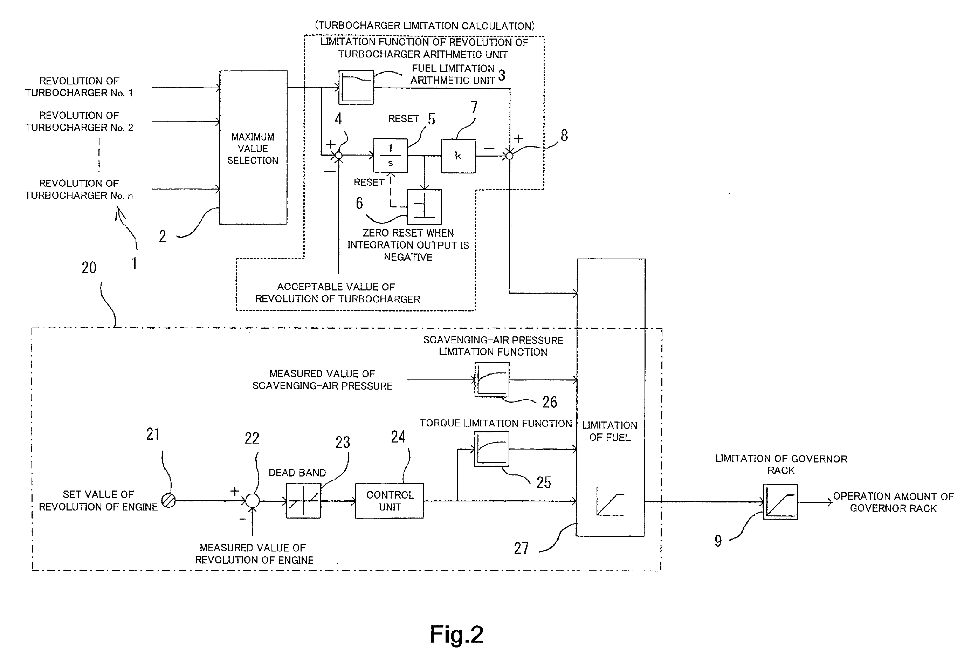

The governor device according to Embodiment 1 shown in Fig. 2 determines a fuel limitation value in accordance with the revolutions of the operating turbochargers and uses the limitation value to control the fuel injection quantity. The governor device according to Embodiment 1 shown in Fig. 2 includes a control portion 20, revolution sensors 1, a maximum value selector 2, a fuel limitation arithmetic unit 3, and the limiting element 9.

The control portion 20 is a basic portion of the governor device and controls the operations of the diesel engine while feeding back the revolution of the engine. The control portion 20 includes a revolution setting portion 21, a comparator 22, a dead band unit 23, a control unit 24, a torque limiter 25, a scavenging-air pressure limiter 26, and a fuel limitation portion 27.

A set value of the revolution of the engine is set in the revolution setting portion 21. The comparator 22 compares this set value with an actually-measured feedback value of the revolution of the engine. A difference obtained by the comparator 22 between these values is input through the dead band unit 23 to the control unit 24 (such as a PI control portion) to be further input through the control unit 24 to the fuel limitation portion 27. The output of the control unit 24 is also input to the torque limiter 25 having a torque limitation function, and a limitation value is input from the torque limiter 25 to the fuel limitation portion 27. Moreover, since it is necessary to balance a fuel quantity with respect to scavenging-air pressure, a scavenging-air pressure measured value measured by a scavenging-air pressure sensor is input to the scavenging-air pressure limiter 26 having a scavenging-air pressure limitation function, and a limitation value is also input from the scavenging-air pressure limiter 26 to the fuel limitation portion 27. The fuel limitation portion 27 is configured to output the limited fuel injection quantity based on the outputs of the limiters 25 and 26. With this, it is possible to prevent the diesel engine from generating excessive torque. The output of the fuel limitation portion 27 is transferred to the limiting element 9, and the limiting element 9 operates and changes the limit of the movement of the governor rack in accordance with the limited fuel injection quantity.

The revolution sensors 1, the maximum value selector 2, and the fuel limitation arithmetic unit 3 serve as units for limiting the fuel in accordance with the revolutions of the turbochargers. The revolution sensors 1 are respectively attached to a plurality of turbochargers of the diesel engine. Signals regarding the revolutions of the turbochargers are input to the maximum value selector 2, the numbers being detected by the revolution sensors 1. The maximum value selector 2 specifies a highest number among all the revolutions of the turbochargers based on the signals of the revolution sensors 1 and inputs the highest number to the fuel limitation arithmetic unit 3. The fuel limitation arithmetic unit 3 outputs a fuel limitation value corresponding to the highest number in accordance with a preset limitation function of the revolution of the turbocharger and inputs this fuel limitation value to the fuel limitation portion 27 of the control portion 20.

With this, if the revolution of the turbocharger operating at the highest speed becomes a predetermined value or more, an output signal from the fuel limitation arithmetic unit 3 significantly acts on the fuel injection quantity limitation of the fuel limitation portion 27. Thus, the limit of the movement of the governor rack is operated to a safe side (low fuel side) via the limiting element 9. Therefore, even in a case where some of the turbochargers are not operating, it is possible to prevent the operating turbocharger from becoming the excessive speed. Since the turbocharger whose revolution is the highest is controlled so as not to be operated at the excessive speed, the speeds of all the operating turbochargers are favorably suppressed.

In the fuel limitation arithmetic unit 3, the limitation function of the revolution of the turbocharger can be set based on, for example, a relation between the fuel injection quantity and the revolution of the turbocharger in the turbocharger cut state, the relation being measured in advance by a test operation. The turbocharger cut can be carried out by closing the turbocharger shut-off valve 56 shown in Fig. 5. Alternatively, instead of operating the shut-off valve 56, the turbocharger cut can be carried out by inserting cut plates for partitioning exhaust and scavenging (intake) passages. As described in Japanese Laid-Open Patent Application Publication No. 2003-328763, the turbocharger cut may be carried out by a method for further changing the capacity of the turbocharger into zero. However, in the marine diesel engine in which the exhaust gas contains a large amount of sticking materials due to, for example, the fuel used, it is preferable to adopt the cut plate.

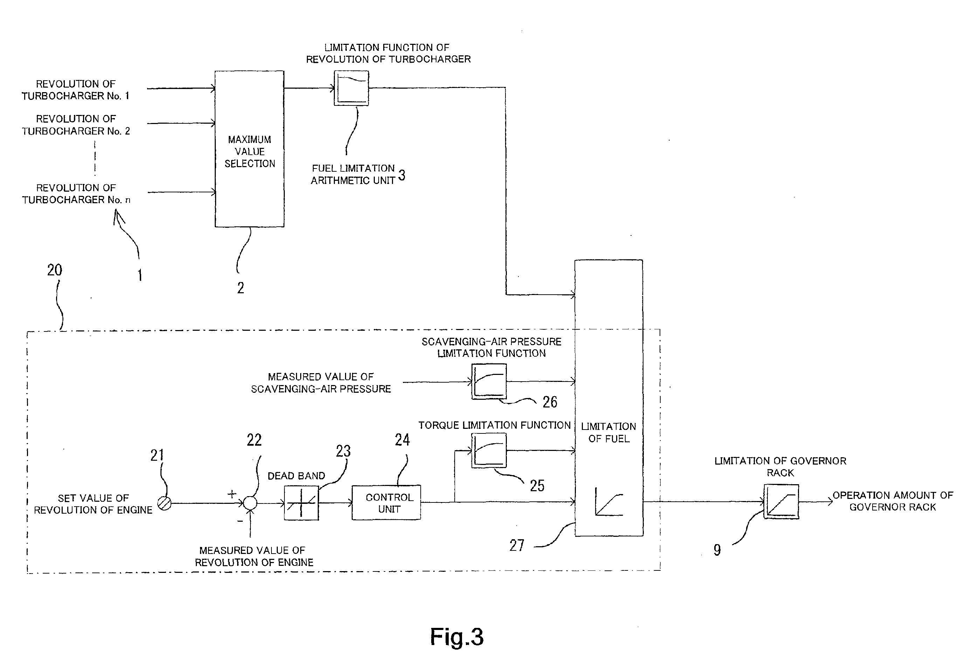

As with Embodiment 1, the governor device according to Embodiment 2 shown in Fig. 3 determines the fuel limitation value by the fuel limitation arithmetic unit 3 and the like in accordance with the revolutions of the operating turbochargers and utilizes this fuel limitation value to determine the fuel injection quantity. However, the governor device according to Embodiment 2 is different from the governor device according to Embodiment 1 in that an automatic correcting unit is attached to the fuel limitation arithmetic unit 3, and the determined fuel limitation value is suitably and automatically corrected by this automatic correcting unit. The same reference signs are used for the same components as in Embodiment 1, and detailed explanations thereof are omitted.

The automatic correcting unit of the fuel limitation arithmetic unit 3 includes a comparator 4, an integration arithmetic unit 5, a reset unit 6, a proportional element 7, and a subtracter 8. The comparator 4 subtracts a preset acceptable value of the revolution of the turbocharger from the number selected by the maximum value selector 2 and outputs the obtained value to the integration arithmetic unit 5. The integration arithmetic unit 5 integrates sequentially-transferred values over a predetermined period of time. When the obtained integrated value is negative, the reset unit 6 carries out a reset operation. In contrast, when the obtained integrated value is positive, the limitation level of the fuel limitation value output from the fuel limitation arithmetic unit 3 is regarded as inadequate. Therefore, the proportional element 7 multiplies the integrated value by a predetermined coefficient, and the subtracter 8 lowers the fuel limitation value by the obtained value. To be specific, if the revolutions of the turbochargers, the numbers being actually measured over a predetermined period of time, are mostly lower than the acceptable value of the revolution of the turbocharger, the fuel limitation value obtained by the fuel limitation arithmetic unit 3 is input to the fuel limitation portion 27 without correction. In contrast, if the revolutions of the turbochargers, the numbers being actually measured over a predetermined period of time, are mostly higher than the acceptable value of the revolution of the turbocharger, the subtracter 8 corrects the fuel limitation value by a value corresponding to an over level or overtime of the revolution, and a signal for further strictly limiting the fuel injection quantity based on the fuel limitation value obtained by the fuel limitation arithmetic unit 3 is input to the fuel limitation portion 27.

The fuel limitation value determined by the fuel limitation arithmetic unit 3 is corrected as above. Therefore, even if the operation status of the diesel engine changes due to various circumstances, it is possible to surely prevent the speed of the turbocharger from becoming too high. This correction can be realized by adding to the governor device of Embodiment 1 a function for manually inputting a correction value by an operator. However, since the governor device in the present embodiment can automatically correct the fuel injection quantity, it is possible to prevent the occurrence of troubles caused by, for example, forgetting to manually input the correction value.

The method for automatically correcting the fuel limitation value is not limited to the method shown in Fig. 3. For example, the automatic correction of the fuel limitation value can be realized by a method for: when the detected revolution of the turbocharger is higher than the acceptable revolution of the turbocharger, gradually lowering the fuel limitation value of the fuel limitation arithmetic unit 3 in accordance with a certain hour rate or a time function; and when the detected revolution of the turbocharger is lowered up to the acceptable revolution of the turbocharger or lower, stopping this gradual lowering of the fuel limitation value.

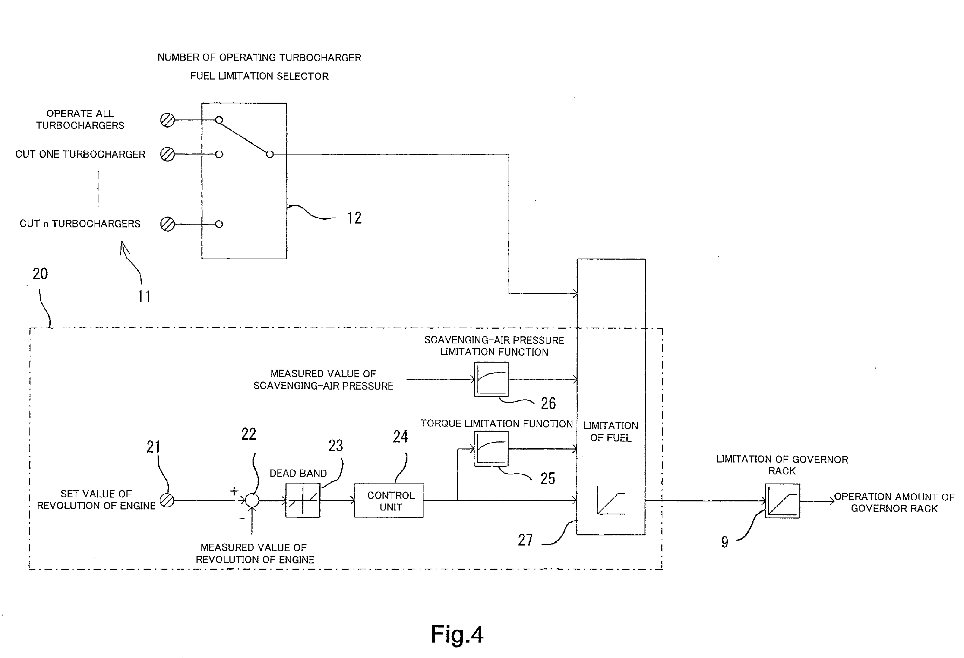

The governor device according to Embodiment 3 shown in Fig. 4 determines the fuel limitation value based on the number of operating turbochargers and inputs the fuel limitation value to the fuel limitation portion 27 to control the fuel injection quantity. The same reference signs are used for the same components as in Embodiments 1 and 2, and detailed explanations thereof are omitted.

The governor device of the present embodiment includes a number-of operating-turbochargers changer 11 and a fuel limitation selector 12. The number-of-operating-turbochargers changer 11 and the fuel limitation selector 12 are connected to each other and serve as units for limiting the fuel in accordance with the number of operating turbochargers. The number-of operating-turbochargers changer 11 specifies the number of operating turbochargers, and the fuel limitation selector 12 determines the fuel limitation value in accordance with the number specified by the number-of operating-turbochargers changer 11 and outputs this fuel limitation value to the fuel limitation portion 27 of the control portion 20.

The number-of operating-turbochargers changer 11 may be configured to specify the number of operating turbochargers based on the manual input of the operator. Moreover, the number-of operating-turbochargers changer 11 may be configured to refer to the detection signals from the revolution sensors 1 (see Figs. 2 and 3) described in Embodiments 1 and 2 and specify as the number of operating turbochargers the number of turbochargers each of whose revolution is not zero or not a small number corresponding to idling. Since the manual input may cause the troubles by, for example, forgetting to input the setting, automatically specifying the number of operating turbochargers is more advantageous.

The fuel limitation selector 12 determines the fuel limitation value based on a ratio of the number of operating turbochargers to the total number of turbochargers. For example, in a case where the total number of turbochargers is n, and the number of operating turbochargers specified by the number-of operating-turbochargers changer 11 is m, a value obtained by multiplying n/m that is the above ratio by a rated fuel limitation value when all the turbochargers are operating may be determined as the fuel limitation value.

The major reason why the excessive speed of the turbocharger occurs when carrying out the turbocharger cut is because the engine exhaust gas which is not supplied to the cut turbochargers is supplied only to the operating turbochargers. Therefore, by setting the fuel limitation value such that the fuel limitation value is proportional to the number of operating turbochargers, the operating turbocharger is unlikely to become the excessive speed during the turbocharger cut. As is clear from the above specific method for determining the fuel limitation value by the fuel limitation selector 12, determining the fuel limitation value in accordance with the number of operating turbochargers is advantageous in that a complex functional block configuration can be omitted, and a simple arithmetic method can be used.

The governor device of the present invention may include the components 1 to 3 serving as the units for limiting the fuel in Embodiment 1 shown in Fig. 2 and the components 11 and 12 serving as the units for limiting the fuel in Embodiment 3 shown in Fig. 4. Similarly, the governor device of the present invention may include the components 11 and 12 and the components 1 to 8 serving as the units for limiting the fuel in Embodiment 2 shown in Fig. 3.

For example, even in the case of not carrying out the turbocharger cut, the turbocharger can be prevented from becoming the excessive speed and can be protected. In addition, the present invention is not limited to marine use and is preferably applicable to diesel engines of the other applications.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the spirit of the present invention.

### Industrial Applicability

The present invention has operational advantages of effectively preventing the turbocharger from becoming the excessive speed and protecting the turbocharger. The present invention is widely applicable to diesel engines including turbochargers.

## Claims

1. A method for controlling a diesel engine including turbochargers (54), comprising the step of limiting a fuel injection quantity based on operation statuses of the turbochargers.

2. The method according to claim 1, further comprising the steps of:
detecting the revolutions of operating turbochargers;
determining a fuel limitation value in accordance with the detected revolutions of the turbochargers; and
determining the fuel injection quantity in accordance with the fuel limitation value.

3. The method according to claim 2, further comprising the step of correcting the fuel limitation value such that each of the detected revolutions of the turbochargers becomes an acceptable revolution of the turbocharger or lower.

4. The method according to any one of claims 1 to 3, further comprising the steps of:
when the diesel engine includes a plurality of the turbochargers, determining the fuel limitation value in accordance with the number of operating turbochargers; and
determining the fuel injection quantity in accordance with the fuel limitation value.

5. The method according to claim 4, further comprising the steps of:
detecting the revolutions of the turbochargers;
identifying the number of operating turbochargers based on the detected revolutions of the turbochargers; and
determining the fuel limitation value in accordance with the identified number of operating turbochargers.

6. A control device of a diesel engine including turbochargers (54), comprising:
a fuel limitation arithmetic unit (3) configured to determine a fuel quantity based on operation statuses of the turbochargers, wherein
the fuel limitation arithmetic unit is connected to a fuel limitation portion (27) configured to transmit an operation signal to a governor rack (103).

7. The control device according to claim 6, wherein the fuel limitation arithmetic unit determines a fuel limitation value in accordance with the revolutions of operating turbochargers.

8. The control device according to claim 7, further comprising
an automatic correcting unit (4-8) configured to correct the fuel limitation value such that each of the revolutions of the operating turbochargers becomes an acceptable revolution of the turbocharger or lower, wherein
the automatic correcting unit is attached to the fuel limitation arithmetic unit.

9. The control device according to any one of claims 6 to 8, wherein when the diesel engine includes a plurality of the turbochargers, the fuel limitation arithmetic unit determines the fuel limitation value in accordance with the number of operating turbochargers among the plurality of turbochargers.

10. The control device according to claim 9, wherein the fuel limitation arithmetic unit includes a number identifying unit (11) configured to detect the revolutions of the turbochargers and identify the number of operating turbochargers based on the detected revolutions of the turbochargers.

11. A ship comprising the control device according to any one of claims 6 to 10.
